# EUROPEAN PATENT APPLICATION

(11) **EP 1 679 578 A1**
(43) Date of publication of application: **12.07.2006**
(21) Application number: 04817416.3
(22) Date of filing: 25.10.2004
(51) Int. Cl.: G06F 3/02

(54) **MOBILE TERMINAL DEVICE**

(30) Priority: 31.10.2003 JP 2003372848
(71) Applicant: MATSUSHITA ELECTRIC INDUSTRIAL CO., LTD., Kadoma-shi, Osaka 571-8501 (JP)
(72) Inventor: UEDA, Shinji c/o Panasonic Mobile Communications, Yokohama-shi, Kanagawa 224-8539 (JP); MOTOZUKA, Hiroyuki c/o Panasonic Mobile Comm. Co.,, Yokohama-shi, Kanagawa 224-8539 (JP); IMAI, Tomohiro c/o Panasonic Mobile Comm. Co., Ltd, Yokohama-shi, Kanagawa 224-8539 (JP)
(74) Representative: Grünecker, Kinkeldey, Stockmair & Schwanhäusser Anwaltssozietät
(86) International application number: PCT/JP2004/015788
(87) International publication number: WO 2005/043367

(57) **Abstract**

Amobile terminal apparatus that considers intervals between key input operations when characters are input, and, when there is an interval grater than a certain period of time between operations, or when a shift is made to different character input, reads aloud the voice corresponding to the stored input character and reads aloud only the character the user needs to check. In this apparatus, when other characters are continuously input by the same key input within a predetermined time, character selection fixing section 201 updates the stored content in present candidate storage section 202, outputs the updated candidate character to display control section 204 as a displaying character and displays the updated candidate character on liquid crystal display section 103. At this time, the voice corresponding to the displaying candidate character is not reproduced. When the predetermined time passes without key input, character selection fixing section 201 reads aloud the present candidate character stored in present candidate storage section 202, outputs the present candidate character to reading determination section 206 as a fixed character, and voice reproduction section 105 reproduces the voice corresponding to the fixed character.

## Description

### Technical Field

The present invention relates to mobile terminal apparatus having key input functions.

### Background Art

Conventionally, mobile communication terminal apparatus disclosed in Patent Document 1 is, for example, proposed as an apparatus that outputs content of key operation in voice in mobile terminal apparatus having key input functions. This mobile communication terminal apparatus has a function of announcing key-input content displayed on a liquid crystal display in voice through a speaker or earphone, and, at the key operation, the key-input content is displayed on liquid crystal display, and also at the same time, read aloud in voice so as to guide the user.

The button telephone terminal system disclosed in Patent Document 2 has a function of outputting the voice corresponding to the dial number input by the button telephone terminal, making it possible to check the input dial number by voice and preventing input errors.
Patent Document 1: Japanese Patent Application Laid-Open No.HEI7-321889
Patent Document 2: Japanese Patent Application Laid-Open No.2001-119468

### Disclosure of Invention

### Problems to be Solved by the Invention

With the above conventional mobile communication terminal apparatus disclosed in patent document 1, key input content is displayed on the liquid crystal display and at the same time the key input content is read aloud. As a result, unfixed key input content keeps being read aloud, which in turn increases the possibility of input errors.

In other words, with mobile communication terminal apparatus, due to their structural restriction, keys are provided that combine numeric keys and character keys, and, when a character is input, the intended character is reached only after operating the same key several times. During this key operation, unfixed characters keep being displayed on the display section and, in case of patent document 1, keep being read aloud. As a result, the user is annoyed by the reading and cannot make effective use of the reading function.

In addition, the above conventional button telephone terminal system disclosed in patent document 2 makes it possible to check the input dial number in voice, but the system is not compatible with voice output of character input key such as a mobile terminal apparatus. Even if the system is capable of announcing in response to character input key operation, there is still the same problem as in patent document 1.

It is therefore an object of the present invention to provide a mobile terminal apparatus that considers intervals between key input operations when characters are input, and, when there is an interval greater than a certain period of time between operations, or when a shift is made to different character input, reads aloud the voice corresponding to the stored input character and reads aloud only the characters the user needs to check.

### Means for Solving the Problem

The mobile terminal apparatus of the present invention with an input section where a plurality of numeric keys combining a plurality of character inputs are arranged, employs a configuration having: a candidate character storage section that, each time a character is input by the numeric keys, stores the input character as a candidate character; a timer section that, each time the character is input by the numeric keys, times a predetermined time; an input character determination section that determines whether or not the predetermined time has been passed after the character was input and a voice output section that, when the input character determination section determines that the predetermined time has been passed after the character was input, outputs voice corresponding to the candidate character that was stored in the candidate character storage section when the character was input.

### Advantageous Effect of the Invention

According to the present invention, it is possible to fix the intended input character and substantially at the same time output voice, make character errors immediately noticeable during inputting, and improve character input accuracy.

### Brief Description of the Drawings

FIG.1 is a diagram showing an appearance of a mobile telephone apparatus according to an embodiment of the present invention;
FIG.2 is a block diagram showing the essential internal configuration of the mobile telephone apparatus according to the embodiment;
FIG.3 is a diagram showing a specific example of operation inside of the mobile telephone apparatus according to the embodiment;
FIG. 4 is a diagram showing an example of the relationship between character input and voice output in the mobile telephone apparatus according to the embodiment;
FIG.5 is a diagram showing another example of the relationship between character input and voice output in the mobile telephone apparatus according to the embodiment; and
FIG.6 is a diagram showing another example of the relationship between character input and voice output in the mobile telephone apparatus according to the embodiment.

### Best Mode for Carrying Out the Invention

An embodiment of the present invention will be described below in detail with reference to the accompanying drawings.

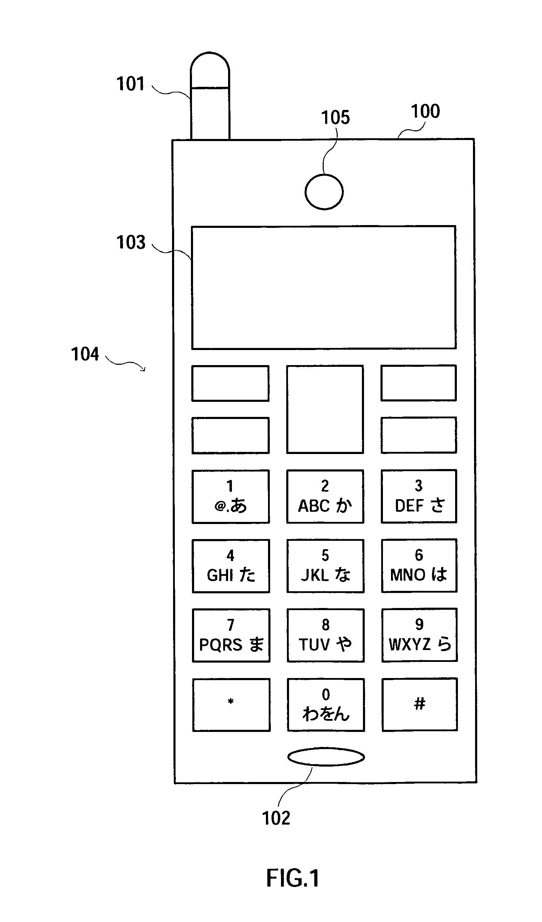

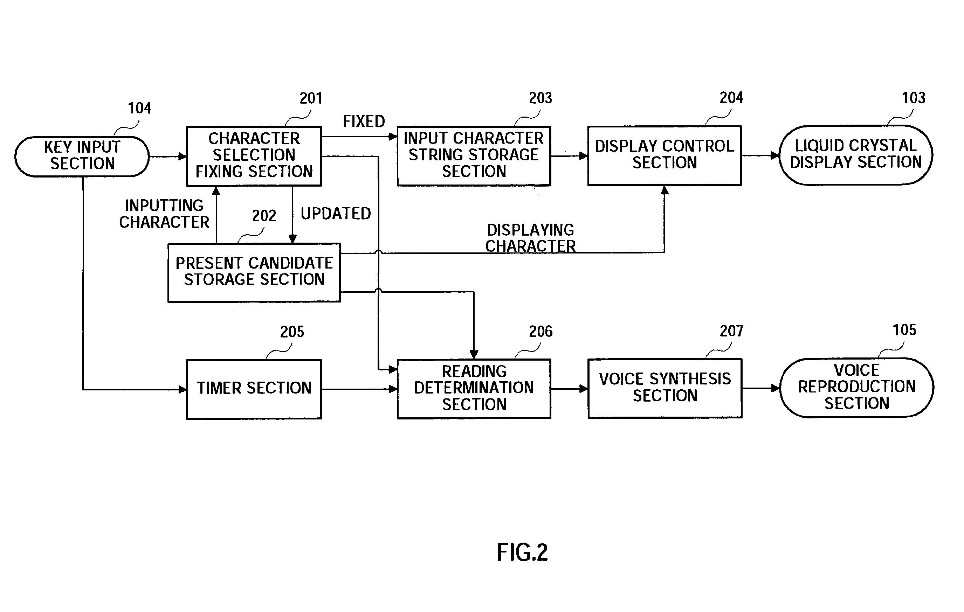

FIG.1 shows an appearance of the mobile telephone apparatus according to the embodiment. In FIG.1, mobile telephone apparatus 100 is composed of antenna 101 transmitting/receiving radio signals, voice reproduction section 105 reproducing voice corresponding to received voice and input character, liquid crystal display section 103 displaying character string corresponding to key input, key input section 104 where numeric keys 0 to 9 combining a number of character input keys and an * key and # key are arranged and voice input section 102 inputting transmitting voice. When the user operates numeric keys 0 to 9, the * key and # key, key input section 104 outputs key input information (numeric keys 0 to 9 or symbol * or #) corresponding to the input key to character selection fixing section 201 and timer section 205 shown in FIG.2.

FIG.2 is a block diagram showing an essential internal configuration of the mobile telephone apparatus of FIG.1. In FIG.2, mobile telephone apparatus 100 is mainly comprised of character selection fixing section 201, present candidate storage section 202, input character string storage section 203, display control section 204, timer section 205, reading determination section 206 and voice synthesis section 207.

When key input information is input from key input section 104 in accordance with key input operation, character selection fixing section 201 stores the first character corresponding to the key input information as a present candidate character in present candidate storage section 202. When key input operation is performed continuously and the corresponding key input information is continuously input, character selection fixing section 201 determines whether or not the previous key input information is the same as the key input information presently input. If these key input information are determined the same, character selection fixing section 201 makes the second character corresponding to key input information the new present candidate character and updates the content stored in present candidate storage section 202, whereas, if these key input information are determined different, character selection fixing section 201 reads the present candidate character stored in the present candidate storage section 202 and outputs the present candidate character to input character string storage section 203 and reading determination section 206 as a fixed character.

Present candidate storage section 202 is a memory storing character information as present candidate character each time character information is input by character selection fixing section 201, and outputs the stored present candidate character to display control section 204 as a displaying character. Input character string storage section 203 is a memory storing characters fixed by character selection fixing section 201 and outputs the stored fixed characters to display control section 204. Display control section 204 outputs the displaying character input from present candidate storage section 202 and the fixed character input from input character string storage section 203 to liquid crystal display section 103 and displays the character corresponding to key input operation.

Timer section 205 is a timer timing a predetermined time each time key input section 104 inputs key input information and outputs a time-up signal to reading determination section 206 as the predetermined time passes. In addition, when next character information is input from key input section 104 while timer section 205 is timing, timer section 205 resets the timing and starts timing again.

When a time-up signal is input from timer section 205, reading determination section 206 obtains the present candidate character from present candidate storage section 202 and outputs the present candidate character to voice synthesis section 207, and when the fixed character is input from character selection fixing section 201, reading determination section 206 outputs the fixed character to voice synthesis section 207. Voice synthesis section 207 converts the present candidate character and the fixed character input from reading determination section 206 into voice data, outputs the converted present candidate character and the fixed character to voice reproduction section 105. Voice reproduction section 105 reproduces the voice corresponding to the candidate character and the fixed character.

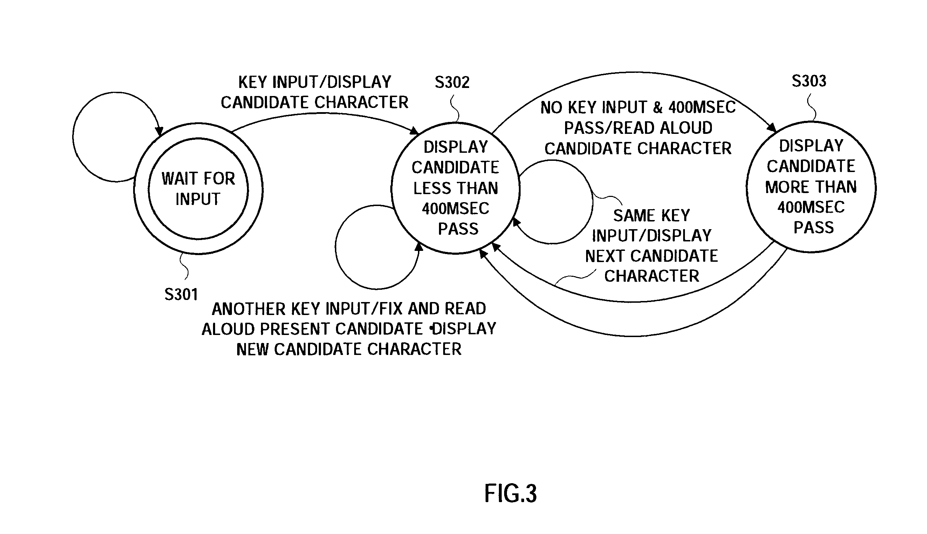

Next, a specific example of operation inside mobile telephone apparatus 100 shown in above FIG.2 will be explained referring to FIG.3. FIG.3 is a diagram showing transition states of operations. First, key input operation of key input section 104 is waited for (S301). When key input operation is performed, a shift is made to state S302, and character selection fixing section 201 stores the input candidate character in present candidate storage section 202. Present candidate storage section 202 outputs the stored present candidate character to display control section 204 as a displaying character and displays the character on liquid crystal display section 103, and timer section 205 that times a certain time after the key input operation starts, which in this case is less than 400msec.

In this state S302, when another character is input by another key input, character selection fixing section 201 reads the present candidate character stored in present candidate storage section 202 and outputs the present candidate character to reading determination section 206 as a fixed character. Reading determination section 206 outputs the fixed character input from character selection fixing section 201 to voice synthesis section 207, and voice reproduction section 105 reproduces the voice corresponding to the fixed character. At this time, the stored content in present candidate storage section 202 is updated by a newly input character input by another key, and the updated candidate character is output as a displaying character to display control section 204 and displayed on liquid crystal displays section 103.

In addition, in state S302, when another character is input by the same key input, the stored content in present candidate storage section 202 is updated, and the updated candidate character is output to display control section 204 as a displaying character and displayed on liquid crystal display section 103. At this time, the voice corresponding to the displayed candidate character is not reproduced. Also, in state S302, when 400msec pass without key input, the state shifts from S302 to S303, and character selection fixing section 201 reads the present candidate character stored in present candidate storage section 202 and outputs the present candidate character to reading determination section 206. Reading determination section 206 outputs the fixed character input from character selection fixing section 201 to voice synthesis section 207 and voice reproduction section 105 reproduces the voice corresponding to the fixed character.

State S303 represents a state where 400msec or more have passed after the present candidate character is displayed. In this state, when the same key as the immediately preceding key is input, the state shifts from S303 to S302, timer section 205 is reset and the timing is restarted, the stored content in present candidate storage section 202 is updated, the updated candidate character is output to display control section 204 and displayed on liquid crystal display section 103 as a displaying character. In state S303, when another key is input, the state shifts to S302, timer section 205 is reset and the timing is restarted, character selection fixing section 201 reads the present candidate character stored in present candidate storage section 202 and outputs the present candidate character to reading determination section 206 as a fixed character. Reading determination section 206 outputs the fixed character input from character selection fixing section 201 to voice synthesis section 207 and voice reproduction section 105 reproduces the voice corresponding to the fixed character. At this time, the stored content in present candidate storage section 202 is updated by a newly input character by another key input, the updated candidate character is output to display control section 204 as a displaying character and displayed on liquid crystal display section 103.

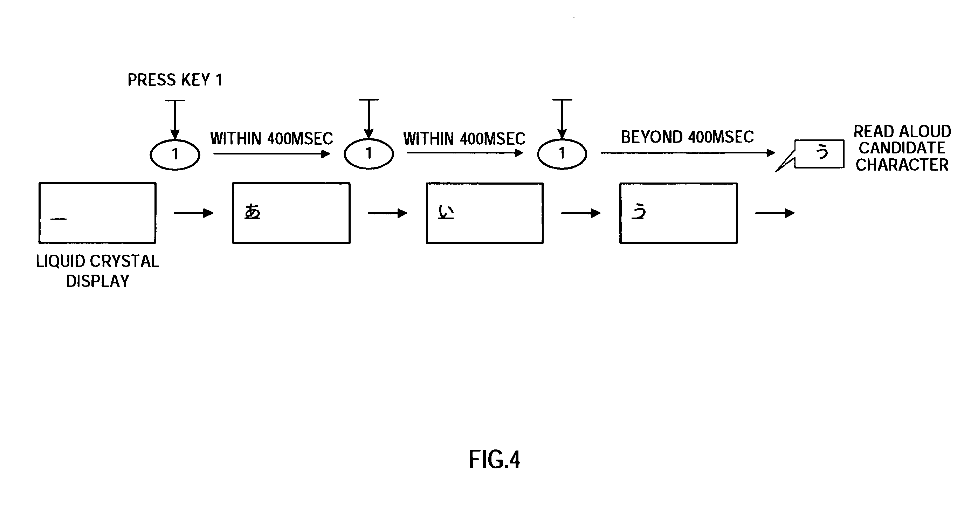

Inside mobile telephone apparatus 100 according to the embodiment of the present invention, the operation state shifts as described above. Next, a specific example of correspondence between key input operation, character display and voice output will be explained with reference to FIGs.4 to 6.

FIG.4 is a diagram showing a case of outputting voice when 400msec or more pass after key input. In FIG. 4, when the numeric key "1" in FIG.1 is pressed once, the character " 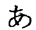 " is displayed on liquid crystal display section 103. Next, when the same numeric key "1" is pressed before 400msec pass, the character " 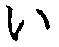 " is displayed on liquid crystal display section 103. Then, when the same numeral key "1" is pressed before 400msec pass, the character " 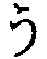 " is displayed on liquid crystal display section 103. Further, if this state continues over 400msec, the voice corresponding to the present candidate character " 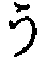 " is reproduced. In this case, the first and second input characters " 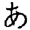 " and " 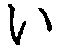 " change to the next candidate character before 400msec pass and are therefore not output in voice, and only the voice for the candidate character " 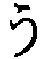 " of when the user stops the operation is reproduced.

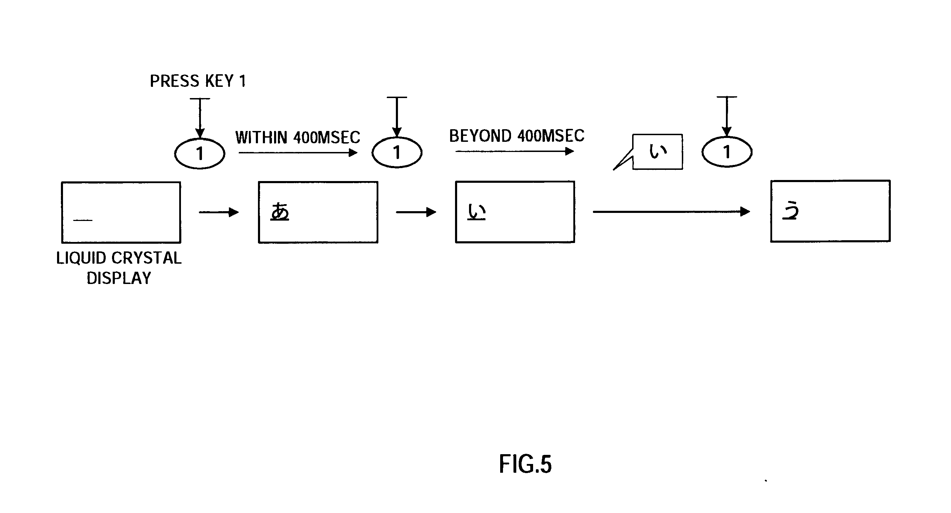

FIG.5 is a diagram showing a case where the next candidate character is displayed by pressing the same numeric key even when 400msec or more pass. In FIG.5, the numeric key "1" shown in FIG.1 is pressed once, the character " 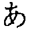 " is displayed on liquid crystal display section 103. Then, when the same numeric key "1" is pressed before 400msec passes, the character " 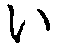 " is displayed on liquid crystal display section 103. Further, if this state continues over 400msec, the voice corresponding to the candidate character " 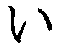 " is reproduced. Next, when the same numeric key "1" is pressed, the next candidate character " 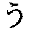 " is displayed on liquid crystal display section 103. In this case, when the user intends to input the character " 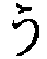 " but quits after twopresses, it is still possible tomake the intended character " 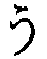 " into the candidate character by pressing the numeric key "1" one more time.

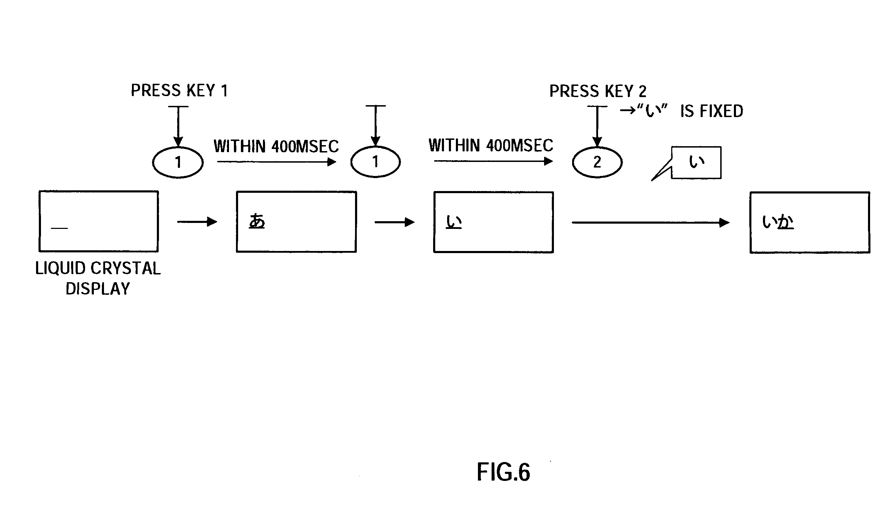

FIG. 6 is a diagram showing a case where the present candidate character is fixed and the candidate character is output in voice by pressing another key even when 400msec or more do not pass. In FIG.5, the numeric key "1" shown in FIG.1 is pressed once, the character " 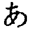 " is displayed on liquid crystal display section 103. Next, when the same numeric key "1" is pressed before 400msec pass, the character " 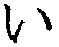 " is displayed on liquid crystal display section 103. Further, when another numeric key "2" is pressed before 400msec pass, the character " 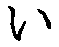 " is fixed, the voice corresponding to " 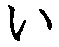 " is reproduced and " 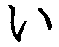 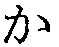 " is displayed on liquid crystal display section 103. In this case, even when 400msec or more do not pass, pressing another key makes it possible to fix the present candidate character and check the character by reproduced voice, and check the next candidate character " 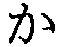 " by display.

As described above, according to mobile telephone apparatus 100 of this embodiment, when the user fixes character input (at the moment when the user is about to start inputting the next character), the voice corresponding to the fixed character is reproduced, and therefore, it is possible to immediately recognize character errors during inputting and improve character input accuracy. In addition, by operating key inputs at enough input intervals, it is possible to check input content and perform character input reliably.

When an intended character is input by repeating the same key input a number of times, sometimes it becomes uncertain how far the inputting has gone. In such cases, the present candidate character can be checked in voice by quitting the input operation, so that the user is able to perform character input operation fast without looking from the key input section to the display section. In addition, when the user inputs an incorrect character and starts inputting the next character, the incorrectly-input character is reproduced in voice at that time, and therefore, it is possible to immediately recognize an incorrectly-input character and reduce unnecessary operations when input operation such as conversion Chinese characters is performed.

Although a case has been described above with the present embodiment where the present invention is applied to a mobile telephone apparatus, the applying of present invention is by no means limited to this, and it is equally possible to apply the present invention to mobile information terminal apparatus having an input section where a plurality of numeric keys combining a plurality of character input are arranged. In addition, in the above-described embodiment, the predetermined time set in the timer section is not limited to 400msec, and it can be changed suitably considering the status of user. Further, the above-described embodiment explains correspondence between character input operation and reproduction voice, and, for example, characteristic voices such as famous people or characters can be sampled and used as reproduction voices. In this case, the user' s character input environment can be further improved.

A first aspect of the mobile terminal apparatus of the present invention with an input section where a plurality of numeric keys combining a plurality of character inputs are arranged employs a configuration having a candidate character storage section that, each time a character is input by the numeric keys, stores the input character as a candidate character, a timer section that, each time the character is input by the numeric keys, times a predetermined time, an input character determination section that determines whether or not the predetermined time has passed after the character was input and a voice output section that, when the input character determination section determines that the predetermined time has passed after the character was input, outputs voice corresponding to the candidate character that was stored in the candidate character storage section when the character was input.

According to this configuration, it is possible to output voice in the circumstance where the character input needs to be fixed (at the moment when the input of the next character is about to start), recognize character errors during inputting and improve character input accuracy.

In a second aspect of the present invention, the mobile terminal apparatus of the first aspect employs a configuration in which the input character determination section determines whether or not a character is input by the same numeric key or a different numeric key before the predetermined time passes, and when the input character determination section determines that the next character is input by the different numeric key before the predetermined time passes, the voice output section outputs voice corresponding to a candidate character that was stored in the candidate character storage section at the last time when a previous character was input.

According to this configuration, it is possible to output a voice when an intended character input is fixed, recognize character errors during inputting and improve character input accuracy.

The present application is based on Japanese Patent Application No.2003-372848, filed on October 31, 2003, entire content of which is expressly incorporated by reference herein.

### Industrial Applicability

The present invention realizes voice output functions that improve character input operability in mobile terminal apparatus with an input section where a plurality of numeric keys combining a plurality of character keys are arranged.

## Claims

1. A mobile terminal apparatus with an input section where a plurality of numeric keys combining a plurality of character keys are arranged, the mobile terminal apparatus comprising:
a candidate character storage section that, each time a character is input by the numeric keys, stores the input character as a candidate character;
a timer section that, each time the character is input by the numeric keys, times a predetermined time;
an input character determination section that determines whether or not the predetermined time has passed after the character was input; and
a voice output section that, when the input character determination section determines that the predetermined time has passed after the character was input, outputs voice corresponding to the candidate character that was stored in the candidate character storage section when the character was input.

2. The mobile terminal apparatus according to claim 1, wherein:
the input character determination section determines whether or not a next character is input by the same numeric key or a different numeric key before the predetermined time passes; and
when the input character determination section determines that the next character is input by the different numeric key before the predetermined time passes, the voice output section outputs voice corresponding to a candidate character that was stored in the candidate character storage section when a previous character was input.
